# EUROPÄISCHE PATENTSCHRIFT

(11) **EP 0 579 141 B1**
(45) Veröffentlichungstag und Bekanntmachung des Hinweises auf die Patenterteilung: **31.01.1996**
(21) Anmeldenummer: 93111080.3
(22) Anmeldetag: 10.07.1993
(51) Int. Cl.: F16L 37/084

(54) **Automatisch montierbare Steckkupplung für Leitungsschläuche in Kraftfahrzeugen**
Automatic mountable plug-coupling for hose pipes in motor vehicles
Montage automatique d'un accouplement enfichable pour tuyaux flexibles dans des véhicules automobiles

(30) Priorität: 15.07.1992 DE 4223251
(43) Veröffentlichungstag der Anmeldung: 19.01.1994
(73) Patentinhaber: Continental Aktiengesellschaft, D-30165 Hannover (DE)
(72) Erfinder: Keuper, Dieter, Dr., D-37589 Kalefeld (DE); Haberjan, Horst, D-29664 Walsrode (DE)

(56) Entgegenhaltungen:
- DE-A- 2 132 181
- DE-A- 3 825 866
- DE-A- 4 003 461

## Beschreibung

Die Erfindung betrifft eine automatisch montierbare Steckkupplung für Leitungsschläuche in Kraftfahrzeugen gemäß dem Oberbegriff des Patentanspruchs 1.

Eine derartige Steckkupplung mit einem fensterartige Öffnungen. aufweisenden Rohrstutzen und einem Schlauchnippel, der einen Dichtring und zungenartige, in diese Öffnungen einrastende Federn aufweist, ist aus der DE-A-2 132 181 bekannt. Bei dieser Kupplung ist jedoch eine fehlerhafte Montage nicht auszuschießen, bei der der Schlauchnippel zwar bis zum Anschlag in den Rohrstutzen eingeführt, aber nicht verrastet ist, da die Federn infolge falscher Winkelstellung des Nippels zum Rohrstutzen nicht mit den Öffnungen fluchten. Eine solche Fehlmontage, die sich insbesondere bei Verwendung von Montageautomaten ergeben kann, führt dazu, daß die Kupplung sich im Betrieb des angeschlossenen Aggregats löst und das durch den Schlauch transportierte Fluid ausströmt, woraus sich verheerende Folgen ergeben können.

Ein weiteres Beispiel einer Steckkupplung ist der EP 0 444 304A1 zu entnehmen. Bei dieser bekannten Steckkupplung wird ein an einem Schlauch befestigter Schlauchnippel fluiddicht an einem Rohrstutzen angekoppelt und mittels eines einfachen Riegelelements fixiert. Diese Steckkupplung zeichnet sich durch eine unkomplizierte Form und damit problemlose Herstellbarkeit sowie durch eine einfache - auch manuelle - Handhabung bei der Montage aus. Dadurch daß das Riegelelement senkrecht zur Axialrichtung der Steckkupplung an diese herangeführt werden muß, wird jedoch ein relativ großer Einbauraum benötigt.

Der Erfindung liegt die Aufgabe zugrunde, für eine automatisch montierbare Steckkupplung der eingangs genannten Art eine verbesserte Ausführungsform anzugeben, mit der die vorstehend beschriebenen Nachteile überwunden, insbesondere Fehlbedienungen und deren Folgen mit Sicherheit vermieden werden.

Diese Aufgabe wird erfindungsgemäß durch eine Steckkupplung der eingangs genannten Gattung gelöst, die die im kennzeichnenden Teil des Patentanspruchs 1 angegebenen Merkmale aufweist.

Erfindungsgemäß weist die vorgeschlagene Steckkupplung eine Verdrehsicherung auf, und zwar befinden sich am Schlauchnippel zumindest zwei Führungsstege, bevorzugt jedoch auf zwei gegenüberliegenden Seiten je zwei Führungsstege, zwischen denen beim Einschieben des Schlauchnippels je ein Steg des Rohrstutzens geführt wird. Die Führungsstege am Schlauchnippel laufen nach vorne hin konisch oder gewölbt auseinander, so daß sie bei einem geringfügig verdrehten Aufstecken des Schlauchnippels eine relative Drehbewegung zwischen Rohrstutzen und Schlauchnippel in der Weise erzeugen, daß beim weiteren Aufschieben gewährleistet ist, daß die Federn sich auf Höhe der fensterartigen Öffnungen befinden und in diese hineinlaufen.

Die Führungsstege am Schlauchnippel dienen weiterhin als Verkantsicherung in Längsrichtung der Schlauchkupplung.

Dies wird dadurch erreicht, daß die Führungsstege eine solche Höhe haben, daß sie sich in etwa an der Innenwand des Rohrstutzens abstützen und somit Verkantungen zwischen Rohrstutzen und Schlauchnippel verhindern.

Durch eine einfache Variation an den Federn des Schlauchnippels kann erreicht werden, daß die Steckkupplung sich nur mit einem Spezialwerkzeug montieren und demontieren läßt oder aber daß auch eine Montage und Demontage von Hand möglich wird. Für das Erreichen der Betriebsposition ergibt sich eine größere Sicherheit, weil die Federn unter einem deutlich hörbaren Knacken in die fensterartigen Öffnungen hineinspringen. Eine erhöhte Betriebssicherheit ergibt sich auch dadurch, daß die beiden Kupplungsteile nur noch auf Druck beansprucht werden.

Dadurch daß die Federn etwa die Breite der fensterartigen Öffnungen aufweisen, bewirken sie nach dem Einrasten gleichzeitig eine exakte gegenseitige Fixierung der Kupplungsteile in Umfangsrichtung, so daß eine Verdrehung des Schlauchnippels relativ zum Rohrstutzen sicher verhindert wird. Ein unvollständiges Stecken des Schlauchnippels bewirkt aufgrund des konischen Verlaufs der Federn ein Zurückfedern der Teile, so daß der nahezu offene Zustand wieder erreicht wird, wodurch eine deutliche Anzeige erfolgt, daß die Steckkupplung nicht vorschriftsmäßig montiert ist. Mit einer unterschiedlichen Einfärbung des Rohrstutzens gegenüber den Federn des Schlauchnippels erhält man zusätzlich eine optische Kontrolle für einen funktionssicheren Sitz.

Wenn auch die bevorzugte Ausführungsform der Steckkupplung mit zwei sich gegenüberliegenden Federn bzw. fensterartigen Öffnungen ausgestattet ist, können nach der Erfindung jedoch auch selbstverständlich drei oder vier Federn bzw. fensterartige Öffnungen vorhanden sein. Bei der erfindungsgemäßen Steckkupplung wird der sichere Halt in der Betriebsposition dadurch gewährleistet, daß sich die Stirnflanken der Federn an dem jeweiligen vorderen Fensterrand abstützen. Die Breite der fensterartigen Öffnungen entspricht etwa einem Drittel des Durchmessers des Rohrstutzens, während die Federn des Schlauchnippels etwa die Breite der Öffnungen im Rohrstutzen aufweisen. Nach einer bevorzugten Ausführungsform sind der vordere Außenteil des Schlauchnippels und der hintere Innenteil des Rohrstutzens konisch ausgebildet.

Die Federn am Schlauchnippel weisen an ihrer freien Stirnseite radial innen einen kleinen axialen Vorsprung auf, der ein Herausspringen aus der fensterartigen Öffnung des Rohrstutzens verhindert. Durch eine nach innen gerichtete Abschrägung des vorderen Randes des Rohrstutzens erhält man ein leichteres Einlaufen der Federn in den Rohrstutzen beim Stecken des Schlauchnippels.

Nach einer bevorzugten Ausführungsform weisen die Federn auf der Innenseite, ausgehend von ihrer Befestigung am übrigen Schlauchnippel, zunächst einen achsparallelen Bereich, dann einen konischen Bereich und dann wieder einen achsparallelen Bereich auf. Der konisch verlaufende mittlere Teil der Federn sollte um etwa 30° zur Axialrichtung der Steckkupplung geneigt verlaufen. Um eine gute Abstützung an den Fensterrändern zu gewährleisten, sollten die Federn senkrecht zur Axialrichtung der Steckkupplung verlaufende Stirnflächen aufweisen. Für eine Handmontage sind die freien Enden der Federn verdickt ausgebildet, wobei die Verdickungen bei montierter Steckkupplung über den Durchmesser des Rohrstutzens hinausragen.

Nachfolgend wird ein Ausführungsbeispiel der Erfindung anhand einer Zeichnung näher erläutert.

Es zeigt
- Fig. 1: einen Rohrstutzen in einem Halbschnitt in Längsrichtung,
- Fig. 2: einen Schlauchnippel in einem Halbschnitt in Längsrichtung,
- Fig. 3: einen Querschnitt durch den Rohrstutzen in der Ebene A-A,
- Fig. 4: einen Querschnitt durch den Schlauchnippel in der Ebene A-A,
- Fig. 5 bis 7: verschiedene Varianten einer Feder in einer fensterartigen Öffnung (schematisch).

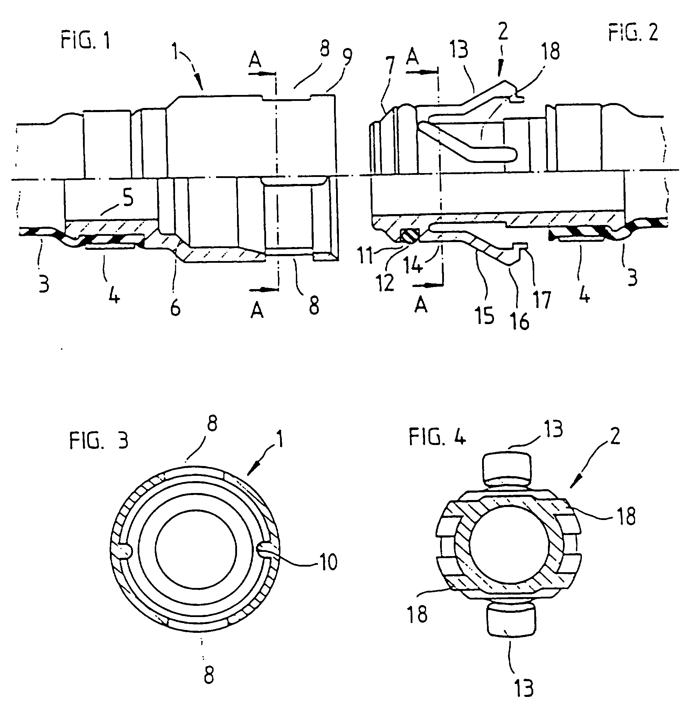

Von der erfindungsgemäßen Steckkupplung ist in den Fig. 1 und 3 ein Rohrstutzen 1 und in den Fig. 2 und 4 ein Schlauchnippel 2 dargestellt. An dem Rohrstutzen 1 und dem Schlauchnippel 2 befinden sich am hinteren Ende in üblicher Weise Schläuche 3, die mit Hilfe von Spannringen 4 befestigt sein können. Der Rohrstutzen 1 oder der Schlauchnippel 2 können jedoch auch bei Bedarf unmittelbar in anderen Teilen integriert sein, z.B. in Rohrverzweigungsstücken. Der Rohrstutzen 2 ist ausgehend von seinem Befestigungsflansch 5 für den Schlauch 3 nach vorne hin hülsenartig aufgeweitet, so daß er in seinem Innenraum den Schlauchnippel 2 aufnehmen kann. Im Übergangsbereich zwischen dem Befestigungsflansch 5 und der vorderen hülsenartigen Aufweitung befindet sich ein konischer Bereich 6, auf den ein konischer Bereich 7 des Schlauchnippels 2 auflaufen kann.

Im vorderen Bereich des Rohrstutzens 1 befinden sich zwei nahezu quadratische, fensterartige Öffnungen 8, die sich gegenüberliegen. Die fensterartigen Öffnungen 8 weisen eine Breite auf,. die etwa einem Drittel des Durchmessers des Rohrstutzens entspricht, und werden nach vorne von dem Randteil 9 des Rohrstutzens 1 begrenzt. Auf der Innenseite des Rohrstutzens 1 verlaufen in Längsrichtung 2 sich gegenüberliegende Stege 10, die gegenüber den Fenstern 8 um 90° versetzt sind. Der Randteil 9 des Rohrstutzens 1 ist auf der Innenseite nach vorne hin abgeschrägt. Der Schlauchnippel 2 weist in seinem vorderen Bereich eine Nut 11 auf, in der sich ein Dichtring 12, z.B. ein 0-Ring, abwurfsicher befindet. Bei der Montage der Steckkupplung gelangt dieser Dichtring 12 unter radialer Kompression zwischen die Wandungsaußenfläche des Schlauchnippels 2 und die Wandungsinnenfläche des Rohrstutzens 3, so daß eine sichere Abdichtung gegenüber durchströmenden Flüssigkeiten gewährleistet wird.

Hinter der Nut 11 gehen von der Wandung des Schlauchnippels 2 zwei sich gegenüberliegende zungenartige Federn 13 aus, die zunächst in einem ersten Bereich 14 axial verlaufen, dann einen konisch verlaufenden Bereich 15 aufweisen und schließlich im vorderen Bereich 16 im wesentlichen wieder axial verlaufen. Der konische Bereich 15 der Federn 13 ist derart dimensioniert, daß beim Einstecken des Schlauchnippels 2 in den Rohrstutzen 1 die Federn 13 von dem Randteil 9 nach radial innen gedrückt werden. Die Federn 13 weisen am radial inneren Ende der Stirnflächen je einen Sicherheitssteg 17 auf, der nach vorne über die Stirnflächen hinausragt.

Auf der axialen Höhe der Federn 13 befinden sich in Umfangsrichtung versetzt dazu auf jeder Seite des Schlauchnippels 2 je zwei Führungsstege 18, die im hinteren Bereich parallel zueinander verlaufen und im vorderen Bereich konisch auseinanderlaufen. Im vorderen Bereich können die Führungsstege 18 auch gewölbt auseinander verlaufen. Im hinteren parallelen Bereich liegen die Führungsstege 18 so weit auseinander, daß sie die Stege 10 des Rohrstutzens zwischen sich aufnehmen können. Somit bilden sie in Verbindung mit den Stegen 10 des Rohrstutzens eine weitere Verdrehsicherung. Die Führungsstege 18 haben jedoch eine Doppelfunktion. Dadurch daß sie in ihrer Höhe so groß gewählt sind, daß sie sich im wesentlichen an der Innenwand des Rohrstutzens 2 abstützen können, bilden sie eine Verkantsicherung in Längsrichtung.

Der Rohrstutzen 1 und der Schlauchnippel 2 bestehen bevorzugt aus einem üblichen Kunststoff und sollten unterschiedlich eingefärbt sein, zumindest sollten jedoch die Federn 13 des Schlauchnippels 2 gegenüber dem Gehäuse des Rohrstutzens 1 eine unterschiedliche Färbung aufweisen.

Nachfolgend wird die Montage der Steckkupplung näher erläutert. Der Schlauchnippel 2 wird in axialer Richtung in den Rohrstutzen 1 eingeführt. Dabei sollten sich in Umfangsrichtung gesehen die Federn 13 auf Höhe der fensterartigen Öffnungen 8 befinden. Sollte dies nicht gewährleistet sein, sorgt die aus den Führungsstegen 18 und den Stegen 10 bestehende Verdrehsicherung dafür, daß beim weiteren Einschieben des Nippels 2 eine Relativbewegung zwischen dem Nippel 2 und dem Rohrstutzen 1 in Umfangsrichtung erfolgt, bis sich die Federn 13 auf der gewünschten Höhe der fensterartigen Öffnungen 8 befinden. Während des Einschiebens des Nippels 2 laufen die konischen Flächen 15 der Federn 13 auf den schrägen Randteil 9 des Rohrstutzens 1 auf und werden nach radial innen gedrückt. Sobald die Federn 13 mit ihren vorderen Stirnflächen die vordere Begrenzungskante der fensterartigen Öffnungen 8 erreicht haben, springen sie unter einem laut hörbaren Knacken in die fensterartigen Öffnungen 8 hinein. Damit ist die Verriegelung der beiden Teile der Kupplung abgeschlossen. Die Nasen 17 sorgen dafür, daß die Federn 13 nicht nach außen hin aus den fensterartigen Öffnungen 8 herausspringen können.

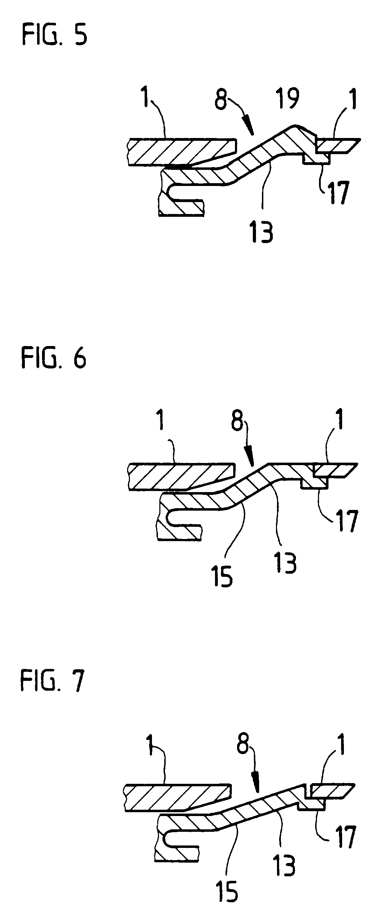

In den Fig. 5 bis 7 sind unterschiedliche Formen der Federn 13 dargestellt sowie ihre Lage in einer fensterartigen Öffnung 8 des Rohrstutzens 1. Bei der Darstellung der Fig. 5 eignet sich die Steckkupplung für eine Montage und Demontage von Hand, während bei den Darstellungen der Fig. 6 und 7 Spezialwerkzeuge erforderlich sind. Beim Beispiel der Fig. 5 weist die Feder 13 in ihrem vorderen Bereich eine Verdickung 19 auf, die bei montierter Steckkupplung über den Durchmesser des Rohrstutzens 1 hinausragt. Für eine Demontage ist es möglich, diese Verdickung mit einem Finger so weit in die fensterartige Öffnung 8 hineinzudrücken, daß die Stirnfläche der Feder 13 radial innen von der Wandung des Rohrstutzens 1 zu liegen kommt, wodurch eine Bewegung des Schlauchnippels 2 nach außen hin freigegeben wird. Im Beispiel der Fig. 6 schließt der vordere Teil der Feder 13 mit dem Sicherheitssteg 17 radial außen bündig mit der Wandung des Rohrstutzens 1 ab, so daß es nicht mehr gelingt, für eine Demontage von Hand die Feder weit genug nach radial innen zu drücken. Fig. 7 zeigt eine weitere Variante der Feder 13, bei der der konische mittlere Teil 15 im wesentlichen bis zum vorderen Ende verlängert ist. Auch hier ist ein Spezialwerkzeug zur Demontage erforderlich.

## Patentansprüche

1. Automatisch montierbare Steckkupplung für Leitungsschläuche in Kraftfahrzeugen zum lösbaren Verbinden eines Rohrstutzens (1) und eines Schlauchnippels (2), der mit seinem freien Ende in den Rohrstutzen (1) einsteckbar und ohne jegliche Drehbewegung dichtend an diesem fixierbar ist, wobei das freie Ende des Schlauchnippels (2) in seiner Wandungsaußenfläche einen Dichtring (12) trägt, der beim Einführen des Schlauchnippels (2) in den Rohrstutzen (1) den Ringspalt zwischen dessen Wandungsinnenfläche und der Wandungsaußenfläche des Schlauchnippels unter radialer Kompression radial ausfüllt und abdichtet, wobei der Rohrstutzen (1) im Bereich seines freien Endes mehrere, insbesondere zwei sich gegenüberliegende fensterartige Öffnungen (8) aufweist und der Schlauchnippel (2), ausgehend von einem Bereich dicht hinter dem Dichtring (12), mehrere, insbesondere zwei sich gegenüberliegende axial nach hinten und über je einen konischen Bereich (15) radial nach außen erstreckende zungenartige Federn (13) aufweist, die beim Einschieben des Schlauchnippels (2) in den Rohrstutzen (1) vom vorderen Rand des Rohrstutzens (1) nach radial innen gedrückt werden und nach Erreichen der Dichtposition nach radial außen in die fensterartigen Öffnungen (8) des Rohrstutzens (1) springen,
**dadurch gekennzeichnet,**
daß sich als Verdrehsicherung am Schlauchnippel (2) zumindest zwei Führungsstege (18) befinden, zwischen denen beim Einschieben des Schlauchnippels (2) ein Steg (10) des Rohrstutzens (1) geführt wird.

2. Steckkupplung nach Anspruch 1, dadurch gekennzeichnet, daß sich je eine solche Verdrehsicherung auf zwei gegenüberliegenden Seiten befindet.

3. Steckkupplung nach Anspruch 1 oder 2, dadurch gekennzeichnet, daß die Führungsstege (18) am Schlauchnippel (2) nach vorne hin konisch oder gewölbt auseinanderlaufen.

4. Steckkupplung nach einem der Ansprüche 1 bis 3, dadurch gekennzeichnet, daß die Führungsstege (18) eine solche Höhe haben, daß sie sich als zusätzliche Verkantsicherung an der Innenwand des Rohrstutzens (1) abstützen.

5. Steckkupplung nach einem der Ansprüche 1 bis 4, dadurch gekennzeichnet, daß sich bei Druckbelastung die Stirnflanke einer jeden Feder (13) am vorderen Rand der jeweiligen fensterartigen Öffnung (8) abstützt.

6. Steckkupplung nach einem der Ansprüche 1 bis 5, dadurch gekennzeichnet, daß die Breite der fensterartigen Öffnungen (8) etwa einem Drittel des Durchmessers des Rohrstutzens (1) entspricht und daß die Federn (13) etwa die Breite der Öffnungen (8) aufweisen.

7. Steckkupplung nach einem der Ansprüche 1 bis 6, dadurch gekennzeichnet, daß der vordere Außenteil (7) des Schlauchnippels (2) und der hintere Innenteil (6) des Rohrstutzens (1) konisch ausgebildet sind.

8. Steckkupplung nach einem der Ansprüche 1 bis 7, dadurch gekennzeichnet, daß die Federn (13) gegenüber dem umgebenden Teil des Rohrstutzens (1) andersartig gefärbt sind.

9. Steckkupplung nach einem der Ansprüche 1 bis 8, dadurch gekennzeichnet, daß die Federn (13) am radial inneren Ende der Stirnflächen einen Sicherheitssteg (17) aufweisen, der nach vorne über die Stirnflächen hinausragt.

10. Steckkupplung nach einem der Ansprüche 1 bis 9, dadurch gekennzeichnet, daß der vordere Rand des Rohrstutzens (1) innen abgeschrägt ist.

11. Steckkupplung nach einem der Ansprüche 1 bis 10, dadurch gekennzeichnet, daß die Federn (13) auf der Innenseite, ausgehend von ihrer Befestigung am übrigen Schlauchnippel (2), zunächst einen achsparallelen Bereich (14), dann einen konischen Bereich (15) und dann wieder einen achsparallelen Bereich (16) aufweisen.

12. Steckkupplung nach Anspruch 11, dadurch gekennzeichnet, daß der konisch verlaufende mittlere Teil (15) der Feder (13) um etwa 30° zur Axialrichtung der Steckkupplung geneigt verläuft.

13. Steckkupplung nach einem der Ansprüche 1 bis 12, dadurch gekennzeichnet, daß die Federn senkrecht zur Axialrichtung der Steckkupplung verlaufende Stirnflächen aufweisen.

14. Steckkupplung nach einem der Ansprüche 1 bis 13, dadurch gekennzeichnet, daß die freien Enden der Federn (13) verdickt sind und die Verdickungen (19) bei montierter Steckkupplung über den Durchmesser des Rohrstutzens (1) hinausragen.

## Claims

1. Automatically mountable plug-in coupling for hose pipes in automotive vehicles for the detachable connection of a connection pipe (1) and a hose nipple (2), which is insertable into the connection pipe (1) with its free end and is sealingly securable thereto without any rotational movement, the free end of the hose nipple (2) being provided, in its outer wall face, with a sealing ring (12) which, when the hose nipple (2) is introduced into the connection pipe (1), radially fills and seals the annular gap between the inner wall face and the outer wall face of the hose nipple under radial compression, the connection pipe (1) having in the region of its free end a plurality of, more especially two, oppositely situated, window-like apertures (8), and the hose nipple (2) has, extending from a region close behind the sealing ring (12), a plurality of, more especially two, oppositely situated, tongue-like resilient members (13), which extend axially rearwardly and radially outwardly over a respective conically tapering region (15), said resilient members being urged radially inwardly by the front edge of the connection pipe (1), when the hose nipple (2) is being inserted into the connection pipe (1), and springing radially outwardly into the window-like apertures (8) in the connection pipe (1) after the sealing position has been reached, characterised in that at least two guide ribs (18) are Situated on the hose nipple (2) as twist-preventing means, and a web (10) of the connection pipe (1) is guided between said guide ribs during the insertion of the hose nipple (2).

2. Plug-in coupling according to claim 1, characterised in that such a twist-preventing means is situated on two respective oppositely situated sides.

3. Plug-in coupling according to claim 1 or 2, characterised in that the guide ribs (18) on the hose nipple (2) diverge away from one another forwardly in a conically tapering or curved manner.

4. Plug-in coupling according to one of claims 1 to 3, characterised in that the guide ribs (18) have such a height that they are supported as additional tilt-preventing means on the internal wall of the connection pipe (1).

5. Plug-in coupling according to one of claims 1 to 4, characterised in that, in the event of compressive loading, the leading end wall of each resilient member (13) is supported on the front edge of the respective window-like aperture (8).

6. Plug-in coupling according to one of claims 1 to 5, characterised in that the width of the window-like apertures (8) corresponds to substantially one-third of the diameter of the connection pipe (1), and in that the resilient members (13) have substantially the width of the apertures (8).

7. Plug-in coupling according to one of claims 1 to 6, characterised in that the front external portion (7) of the hose nipple (2) and the rear internal portion (6) of the connection pipe (1) taper conically.

8. Plug-in coupling according to one of claims 1 to 7, characterised in that the resilient members (13) are a different colour from the surrounding part of the connection pipe (1).

9. Plug-in coupling according to one of claims 1 to 8, characterised in that the resilient members (13) are provided, on the radially inner end of the end faces with a safety web (17), which protrudes forwardly beyond the end faces.

10. Plug-in coupling according to one of claims 1 to 9, characterised in that the front edge of the connection pipe (1) is inwardly inclined.

11. Plug-in coupling according to one of claims 1 to 10, characterised in that the resilient members (13) are provided on the inside, extending from their securement on the remaining hose nipple (2), with an axis-parallel region (14) initially, then with a conically tapering region (15) and then with an axis-parallel region (16) again.

12. Plug-in coupling according to claim 11, characterised in that the conically tapering central portion (15) of the resilient member (13) extends inclinedly through substantially 30° relative to the axial direction of the plug-in coupling.

13. Plug-in coupling according to one of claims 1 to 12, characterised in that the resilient members have end faces which extend perpendicularly relative to the axial direction of the plug-in coupling.

14. Plug-in coupling according to one of claims 1 to 13, characterised in that the free ends of the resilient members (13) are thickened, and the thickened portions (19) protrude beyond the diameter of the connection pipe (1) when the plug-in coupling is mounted.

## Revendications

1. Raccord mâle-femelle susceptible de montage automatique pour tuyaux de canalisations dans les véhicules automobiles, destiné à raccorder de façon démontable une tubulure (1) et un embout de tuyau (2) qui peut être inséré dans la tubulure (1) par son extrémité libre et être fixé à joint étanche dans cette dernière sans aucun mouvement de rotation, l'extrémité libre de l'embout de tuyau (2) portant, dans sa surface extérieure de paroi, une bague d'étanchéité (12) qui, lorsqu'on insère l'embout de tuyau (2) dans la tubulure (1), comble radialement et ferme hermétiquement la fente annulaire entre la surface intérieure de la paroi de la tubulure et la surface extérieure de la paroi de l'embout de tuyau, en étant sous compression radiale, la tubulure (1) présentant dans la région de son extrémité libre plusieurs, notamment deux, ouvertures (8) en forme de fenêtre mutuellement opposées, et l'embout de tuyau (2) présentant, en partant d'une région située juste en arrière de la bague d'étanchéité (12), plusieurs, notamment deux, ressorts (13) en forme de languette, mutuellement opposés, qui s'étendent axialement vers l'arrière et radialement vers l'extérieur sur une région conique (15), ressorts qui, lors de l'insertion de l'embout de tuyau (2) dans la tubulure (1) sont comprimés radialement vers l'intérieur par le bord avant de la tubulure (1), et sautent radialement vers l'extérieur en s'engageant dans les ouvertures (8) en forme de fenêtre de la tubulure (1) après avoir atteint la position d'étanchéité,
caractérisé
en ce qu'il se trouve, sur l'embout de tuyau (2), pour servir de sécurité de décalage en rotation, au moins deux nervures de guidage (18) entre lesquelles une nervure (10) de la tubulure (1) est guidée lors de l'insertion du l'embout de tuyau (2).

2. Raccord mâle-femelle selon la revendication 1, caractérisé en ce qu'une sécurité de décalage de rotation se trouve sur chacun de deux côtés opposés.

3. Raccord mâle-femelle selon la revendication 1 ou 2, caractérisé en ce que les nervures de guidage (18) formées sur l'embout de tuyau (2) s'écartent vers l'avant avec une forme conique ou bombée.

4. Raccord mâle-femelle selon une des revendications 1 à 3, caractérisé en ce que les nervures de guidage (18) ont une hauteur telle qu'elles prennent appui contre la paroi intérieure de la tubulure (1) pour servir de sécurité additionnelle vis-à-vis du décalage en rotation.

5. Raccord mâle-femelle selon une des revendications 1 à 4, caractérisé en ce qu'en réponse à une charge de pression, la face frontale de chaque ressort (13) prend appui contre le bord avant de l'ouverture (8) en forme de fenêtre qui lui correspond.

6. Raccord mâle-femelle selon une des revendications 1 à 5, caractérisé en ce que la largeur des ouvertures (8) en forme de fenêtre correspond à peu près à un tiers du diamètre de la tubulure (1) et en ce que les ressorts (13) présentent à peu près la largeur des ouvertures (8).

7. Raccord mâle-femelle selon une des revendications 1 à 6, caractérisé en ce que la partie extérieure avant (7) de l'embout de tuyau (2) et la partie intérieure arrière (6) de la tubulure (1) sont de forme conique.

8. Raccord mâle-femelle selon une des revendications 1 à 7, caractérisé en ce que les ressorts (13) ont une couleur différente de celle de la partie de la tubulure (1) qui les entoure.

9. Raccord mâle-femelle selon une des revendications 1 à 8, caractérisé en ce que les ressorts (13) présentent, à l'extrémité radialement intérieure de leur face frontale, un bec de sécurité (17) qui fait saillie à l'avant au-delà de la face frontale.

10. Raccord mâle-femelle selon une des revendications 1 à 9, caractérisé en ce que le bord avant de la tubulure (1) est chanfreiné vers l'intérieur.

11. Raccord mâle-femelle selon une des revendications 1 à 10, caractérisé en ce que les ressorts (13) présentent, sur leur face intérieure, en partant de leur fixation sur le reste de l'embout de tuyau (2), tout d'abord une région (14) parallèle à l'axe puis une région conique (15) puis de nouveau une région (16) parallèle à l'axe.

12. Raccord mâle-femelle selon la revendication 11, caractérisé en ce que la partie centrale (15) d'allure conique du ressort (13) est inclinée d'environ 30° sur la direction axiale du raccord mâle-femelle.

13. Raccord mâle-femelle selon une des revendications 1 à 12, caractérisé en ce que les ressorts présentent des faces frontales qui s'étendent perpendiculairement à la direction axiale du raccord mâle-femelle.

14. Raccord mâle-femelle selon une des revendications 1 à 13, caractérisé en ce que les extrémités libres des ressorts (13) sont renflées et les renflements (19) font saillie au-delà du diamètre de la tubulure (1) lorsque le raccord mâle-femelle est monté.
